# EUROPEAN PATENT SPECIFICATION

(11) **EP 3 499 834 B1**
(45) Date of publication and mention of the grant of the patent: **01.12.2021**
(21) Application number: 16916069.4
(22) Date of filing: 19.09.2016
(51) Int. Cl.: H04L 29/06, H04W 12/04, H04W 12/041, H04W 12/0471, H04L 9/08, H04W 76/15

(54) **KEY NEGOTIATION METHOD AND APPARATUS**
VERFAHREN UND VORRICHTUNG ZUR SCHLÜSSELVERHANDLUNG
APPAREIL ET PROCÉDÉ DE NÉGOCIATION DE CLÉ

(43) Date of publication of application: 19.06.2019
(73) Proprietor: Huawei Technologies Co., Ltd., Longgang District Shenzhen, Guangdong 518129 (CN)
(72) Inventor: LI, He, Shenzhen Guangdong 518129 (CN); CHEN, Jing, Shenzhen Guangdong 518129 (CN); WANG, Jiangsheng, Shenzhen Guangdong 518129 (CN)
(74) Representative: Pfenning, Meinig & Partner mbB
(86) International application number: PCT/CN2016/099366
(87) International publication number: WO 2018/049689

(56) References cited:
- WO-A1-2015/108382
- CN-A- 101 052 033
- CN-A- 105 592 455
- CN-A- 105 830 476
- HUAWEI ET AL: "key refresh initiated by SeNB", 3GPP DRAFT; DRAFT_S3-140579 REPLACES S3-140356, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sophia Antipolis (France); 20140331 - 20140402 4 April 2014 (2014-04-04), XP050837446, Retrieved from the Internet: URL:http://www.3gpp.org/ftp/tsg_sa/WG3_Sec urity/TSGS3_74b_Sophia/Docs/ [retrieved on 2014-04-04]
- HUAWEI ET AL: "key refresh when KeNB updates", 3GPP DRAFT; DRAFT_S3-140580 REPLACES S3-140357, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sophia Antipolis (France); 20140331 - 20140402 4 April 2014 (2014-04-04), XP050837447, Retrieved from the Internet: URL:http://www.3gpp.org/ftp/tsg_sa/WG3_Sec urity/TSGS3_74b_Sophia/Docs/ [retrieved on 2014-04-04]
- HUAWEI ET AL: "Corrections on SCG security algorithm negotiation", 3GPP DRAFT; 33401_CR0546R1_(REL-12)_S3-151153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sorrento, Italy; 20150126 - 20150130 8 March 2015 (2015-03-08), XP050940541, Retrieved from the Internet: URL:http://www.3gpp.org/ftp/Meetings_3GPP_ SYNC/SA/Docs/ [retrieved on 2015-03-08]
- ALCATEL-LUCENT ET AL: "Security functionality for dual connectivity", 3GPP DRAFT; 33401_CR0525R1_(REL-12)_S3-140957, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sapporo, Japan 13 June 2014 (2014-06-13), XP050801764, Retrieved from the Internet: URL:http://www.3gpp.org/ftp/Meetings_3GPP_ SYNC/SA/Docs/ [retrieved on 2014-06-13]
- HUAWEI ET AL: "Session Key Enforcement with Diffie-Hellman Procedure", 3GPP DRAFT; S3-160564-FORWARD-SECRECY-OF-SESSION-KEY-E NHANCEMENT-28-04-2016, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. SA WG3, no. San Jose Del Cabo, Mexico; 20160509 - 20160513 8 May 2016 (2016-05-08), XP051099226, Retrieved from the Internet: URL:http://www.3gpp.org/ftp/Meetings_3GPP_ SYNC/Docs/ [retrieved on 2016-05-08]

## Description

### TECHNICAL FIELD

The present invention relates to the wireless communications technologies, and in particular, to a key negotiation method and apparatus.

### BACKGROUND

With development of wireless communications technologies, development and research of the 5th-Generation mobile communications technologies (5th-Generation, 5G for short) keep being proposed. Currently, there are mainly two types of deployment of 5G base stations. In a first type, a 5G base station directly accesses a 5G core network. In a second type, a 5G base station accesses a Long Term Evolution (Long Term Evolution, LTE for short) core network. There may be two specific access manners for the second type. In one manner, the 5G base station accesses the LTE core network directly. In the other manner, the 5G base station accesses the LTE core network by using an LTE base station.

However, when the 5G base station accesses the LTE core network by using an LTE base station, there is still no appropriate key generation and transmission method.

The 3GPP Drafts S3-140579, S3-140580, S3-151153 and S3-140957 respectively describe a method for updating a base key of a Secondary eNodeB, SeNB, in which a Master eNodeB, MeNB, forwards an SCG modification request from the SeNB to a UE and the MeNB generates a counter parameter used to update the base key and distributes a corresponding parameter.

3GPP Draft S3-160564 describes enforcing a session key using a Diffi-Hellmann Procedure to enforce forward secrecy of session keys for a case of SIM-leakage.

### SUMMARY

According to the present application, the above objects are solved by the claimed matter according to the independent claims. The invention is defined in the appended set of claims. Embodiments of the present invention provide a key negotiation method and apparatus, so as to provide a key generation and transmission method.

According to a first aspect of the embodiments of the present invention, a key negotiation method is provided. The method includes:
obtaining, by a first base station, a selected key generation capability, and generating a first key parameter based on the selected key generation capability;
sending, by the first base station, the first key parameter to a second base station, where the first key parameter is forwarded by the second base station to a terminal; and
obtaining, by the first base station, a second key parameter generated by the terminal, and generating a first base key based on the first key parameter and the second key parameter.

Optionally, the obtaining, by a first base station, a selected key generation capability includes:
receiving, by the first base station, a key generation capability combination sent by the second base station, where the key generation capability combination includes at least one key generation capability; and
selecting, by the first base station, the selected key generation capability from the key generation capability combination.

Optionally, the selecting, by the first base station, the selected key generation capability from the key generation capability combination includes:
selecting, by the first base station, the selected key generation capability from the key generation capability combination based on a key generation capability priority.

Optionally, the method further includes:
sending, by the first base station, the selected key generation capability to the second base station, so that the selected key generation capability is forwarded by the second base station to the terminal.

Optionally, the obtaining, by a first base station, a selected key generation capability includes:
receiving, by the first base station, a first signaling message sent by the second base station, where the first signaling message includes the selected key generation capability, and the selected key generation capability is determined by the terminal.

Optionally, the method further includes:
receiving, by the first base station, a selected security algorithm sent by the second base station, where the selected security algorithm is selected by the second base station based on at least one security algorithm.

According to a second aspect of the embodiments of the present invention, a key negotiation method is provided, including:
obtaining, by a terminal, a selected key generation capability, and generating a second key parameter based on the selected key generation capability;
obtaining, by the terminal, a first key parameter forwarded by a second base station, where the first key parameter is generated by a first base station based on the selected key generation capability; and
generating, by the terminal, a second base key based on the first key parameter and the second key parameter.

Optionally, the obtaining, by a terminal, a selected key generation capability includes:
receiving, by the terminal, a second signaling message sent by the second base station, where the second signaling message includes the selected key generation capability.

Optionally, the second signaling message further includes the first key parameter.

Optionally, the second signaling message further includes a selected security algorithm, and the selected security algorithm is selected by the second base station based on at least one security algorithm.

Optionally, the obtaining, by a terminal, a selected key generation capability includes:
obtaining, by the terminal, a key generation capability combination, where the key generation capability combination includes at least one key generation capability; and
selecting, by the terminal, the selected key generation capability from the key generation capability combination.

Optionally, after the selecting, by the terminal, the selected key generation capability from the key generation capability combination, the method further includes:
sending, by the terminal, the selected key generation capability to the second base station, so that the selected key generation capability is forwarded by the second base station to the first base station.

Optionally, the method further includes:
receiving, by the terminal, a selected security algorithm sent by the second base station, where the selected security algorithm is selected by the second base station based on at least one security algorithm.

According to a third aspect of the embodiments of the present invention, a key negotiation method is provided, including:
receiving, by a second base station, a first key parameter sent by a first base station; and
forwarding, by the second base station, the first key parameter to a terminal.

Optionally, before the receiving, by a second base station, a first key parameter sent by a first base station, the method further includes:
sending, by the second base station, a key generation capability combination to the first base station, where the key generation capability combination includes at least one key generation capability.

Optionally, the method further includes:
receiving, by the second base station, a selected key generation capability sent by the first base station; and
forwarding, by the second base station, the selected key generation capability to the terminal.

Optionally, the forwarding, by the second base station, the selected key generation capability to the terminal includes:
sending, by the second base station, a second signaling message to the terminal, where the second signaling message includes the selected key generation capability.

Optionally, the second signaling message further includes the first key parameter.

Optionally, the second signaling message further includes a selected security algorithm, and the selected security algorithm is selected by the second base station based on at least one security algorithm.

Optionally, the method further includes:
receiving, by the second base station, a selected key generation capability sent by the terminal; and
forwarding, by the second base station, the selected key generation capability to the first base station.

Optionally, the method further includes:
sending, by the second base station, a selected security algorithm to the terminal and the first base station separately, where the selected security algorithm is selected by the second base station based on at least one security algorithm.

According to a fourth aspect of the embodiments of the present invention, a key negotiation apparatus is provided. The apparatus includes modules or means (means) configured to perform the method provided in the foregoing first aspect and various implementations of the first aspect.

The apparatus includes:
an obtaining module, configured to: obtain a selected key generation capability, and generate a first key parameter based on the selected key generation capability;
a sending module, configured to send the first key parameter to a second base station, where the first key parameter is forwarded by the second base station to a terminal; and
a generation module, configured to: obtain a second key parameter generated by the terminal, and generate a first base key based on the first key parameter and the second key parameter.

Optionally, the apparatus further includes:
a receiving module, configured to receive a key generation capability combination sent by the second base station, where the key generation capability combination includes at least one key generation capability; and
a selection module, configured to select the selected key generation capability from the key generation capability combination, where
the selection module is specifically configured to select the selected key generation capability from the key generation capability combination based on a key generation capability priority.

Optionally, the sending module is further configured to send the selected key generation capability to the second base station, so that the selected key generation capability is forwarded by the second base station to the terminal.

Optionally, the obtaining module is specifically configured to receive a first signaling message sent by the second base station, where the first signaling message includes the selected key generation capability, and the selected key generation capability is determined by the terminal.

Optionally, the receiving module is further configured to receive a selected security algorithm sent by the second base station, where the selected security algorithm is selected by the second base station based on at least one security algorithm.

According to a fifth aspect of the embodiments of the present invention, a key negotiation apparatus is provided. The apparatus includes modules or means configured to perform the method provided in the foregoing second aspect and various implementations of the second aspect.

The apparatus includes:
an obtaining module, configured to: obtain a selected key generation capability, and generate a second key parameter based on the selected key generation capability; and obtain a first key parameter forwarded by a second base station, where the first key parameter is generated by a first base station based on the selected key generation capability; and
a generation module, configured to generate a second base key based on the first key parameter and the second key parameter.

Optionally, the obtaining module is specifically configured to receive a second signaling message sent by the second base station, where the second signaling message includes the selected key generation capability.

Optionally, the second signaling message further includes the first key parameter.

Optionally, the second signaling message further includes a selected security algorithm, and the selected security algorithm is selected by the second base station based on at least one security algorithm.

Optionally, the obtaining module is specifically configured to: obtain a key generation capability combination, where the key generation capability combination includes at least one key generation capability; and select the selected key generation capability from the key generation capability combination.

The apparatus further includes: a sending module, configured to send the selected key generation capability to the second base station, so that the selected key generation capability is forwarded by the second base station to the first base station.

The apparatus further includes: a receiving module, configured to receive a selected security algorithm sent by the second base station, where the selected security algorithm is selected by the second base station based on at least one security algorithm.

According to a sixth aspect of the embodiments of the present invention, a key negotiation apparatus is provided. The apparatus includes modules or means configured to perform the method provided in the foregoing third aspect and various implementations of the third aspect.

The apparatus includes:
a receiving module, configured to receive a first key parameter sent by a first base station; and
a sending module, configured to forward the first key parameter to a terminal.

Optionally, the sending module is further configured to: before the receiving module receives the first key parameter sent by the first base station, send a key generation capability combination to the first base station, where the key generation capability combination includes at least one key generation capability.

Optionally, the receiving module is further configured to receive a selected key generation capability sent by the first base station, and the sending module forwards the selected key generation capability to the terminal.

Optionally, the sending module is specifically configured to send a second signaling message to the terminal, where the second signaling message includes the selected key generation capability.

Optionally, the second signaling message further includes the first key parameter.

Optionally, the second signaling message further includes a selected security algorithm, and the selected security algorithm is selected by the second base station based on at least one security algorithm.

Optionally, the receiving module is further configured to receive a selected key generation capability sent by the terminal, and the sending module is configured to forward the selected key generation capability to the first base station.

Optionally, the sending module is further configured to send a selected security algorithm to the terminal and the first base station separately, where the selected security algorithm is selected by the second base station based on at least one security algorithm.

According to a seventh aspect of the embodiments of the present invention, a key negotiation apparatus is provided. The apparatus includes a processor and a memory, where the memory is configured to store a program, and the processor invokes the program stored in the memory to perform the method provided in the first aspect of the embodiments of the present invention.

According to an eighth aspect of the embodiments of the present invention, a key negotiation apparatus is provided. The apparatus includes a processor and a memory, where the memory is configured to store a program, and the processor invokes the program stored in the memory to perform the method provided in the second aspect of the embodiments of the present invention.

According to a ninth aspect of the embodiments of the present invention, a key negotiation apparatus is provided. The apparatus includes a processor and a memory, where the memory is configured to store a program, and the processor invokes the program stored in the memory to perform the method provided in the third aspect of the embodiments of the present invention.

According to a tenth aspect of the embodiments of the present invention, a key negotiation apparatus is provided, including at least one processing element (or chip) configured to perform the method in the first aspect.

According to an eleventh aspect of the embodiments of the present invention, a key negotiation apparatus is provided, including at least one processing element (or chip) configured to perform the method in the second aspect.

According to a twelfth aspect of the embodiments of the present invention, a key negotiation apparatus is provided, including at least one processing element (or chip) configured to perform the method in the third aspect.

According to the key negotiation method and apparatus provided in the embodiments of the present invention, the first base station obtains the selected key generation capability, and generates the first key parameter based on the selected key generation capability; and the second base station forwards the first key parameter to the terminal, where the first base station generates a base key based on the first key parameter and the second key parameter that is generated by the terminal, so that the first base station independently generates the base key, and the second base station plays only a role of parameter transfer. In this way, it can be ensured that the second base station cannot learn of the base key generated by the first base station, thereby ensuring key security.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may derive other drawings from these accompanying drawings without creative efforts.
FIG. 1 is a schematic diagram of a system architecture of a key negotiation method according to an embodiment of the present invention;
FIG. 2 is a schematic flowchart of a key negotiation method according to an embodiment of the present invention;
FIG. 3 is a schematic flowchart of another key negotiation method according to an embodiment of the present invention;
FIG. 4 is a schematic flowchart of another key negotiation method according to an embodiment of the present invention;
FIG. 5 is a schematic flowchart of another key negotiation method according to an embodiment of the present invention;
FIG. 6 is a schematic flowchart of another key negotiation method according to an embodiment of the present invention;
FIG. 7 is a schematic structural diagram of a key negotiation apparatus according to an embodiment of the present invention; and
FIG. 8 is a schematic structural diagram of another key negotiation apparatus according to an embodiment of the present invention.

### DESCRIPTION OF EMBODIMENTS

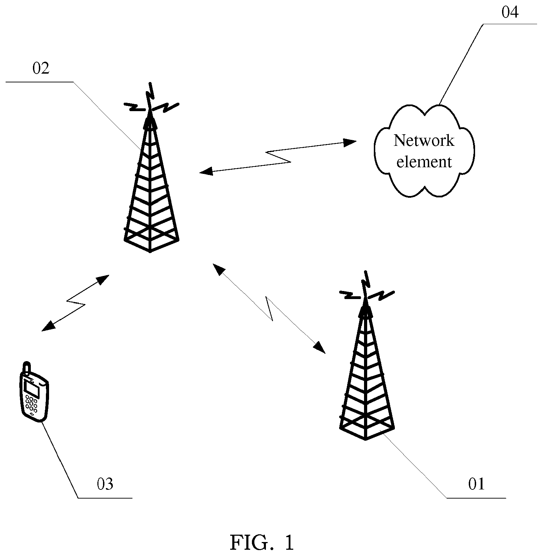

FIG. 1 is a schematic diagram of a system architecture of a key negotiation method according to an embodiment of the present invention. As shown in FIG. 1, the system may include a first base station 01, a second base station 02, a terminal 03, and a network element device 04.

The first base station 01 may be a next-generation (NextGen Radio, NR for short) base station, for example, a 5G base station.

The second base station 02 may be a current LTE base station.

Certainly, the embodiment is not limited thereto. The first base station and the second base station each may be a base transceiver station (Base Transceiver Station, BTS for short) in Global System for Mobile Communications (Global System for Mobile Communications, GSM for short) or Code Division Multiple Access (Code Division Multiple Access, CDMA for short); or may be a NodeB (NodeB, NB for short) in Wideband Code Division Multiple Access (Wideband Code Division Multiple Access, WCDMA for short); or may be an Evolved NodeB (Evolutional NodeB, eNB or eNodeB for short) in LTE, or a relay station or an access point, or a base station in a future 5G network, or the like. The embodiment is not limited thereto.

The network element device 04 may be a network element in an LTE core network. Optionally, the network element device 04 may be a Mobility Management Entity (Mobility Management Entity, MME for short). This is not limited thereto.

The terminal 03 may be a terminal connected to the second base station 02.

Specifically, the terminal 03 may be a wireless terminal or a wired terminal. The wireless terminal may be a device that provides a user with voice and/or other service data connectivity, a handheld device having a wireless connection function, or another processing device connected to a wireless modem. The wireless terminal may communicate with one or more core networks through a radio access network (Radio Access Network, RAN for short). The wireless terminal may be a mobile terminal, such as a mobile phone (also referred to as a "cellular" phone) or a computer equipped with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (Personal Communications Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile (Mobile), a remote station (Remote Station), a remote terminal (Remote Terminal), an access terminal (Access Terminal), a user terminal (User Terminal), a user agent (User Agent), or user equipment (User Device or User Equipment). The emdodiment is not limited thereto.

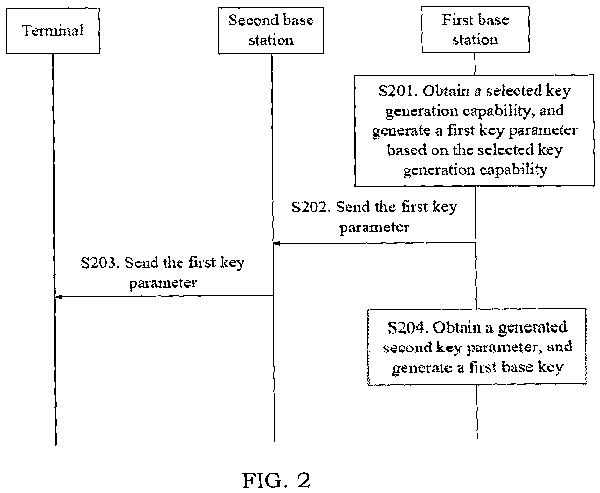

FIG. 2 is a schematic flowchart of a key negotiation method according to an embodiment of the present invention. As shown in FIG. 2, the method includes the following steps.

S201. A first base station obtains a selected key generation capability, and generates a first key parameter based on the selected key generation capability.

The selected key generation capability herein is an optimal key generation capability selected from a plurality of key generation capabilities, and specifically may be selected by the first base station or a terminal. The embodiment is not limited thereto.

The key generation capability may also be referred to as a key exchange protocol or a key exchange algorithm. The key generation capability may be a Diffie-Hellman (Diffie-Hellman, D-H for short) capability, or may be an elliptic curve cryptography (Elliptic Curve Cryptosystems, ECDH for short) capability, or may be another type of D-H algorithm, or a key generation capability having a similar function, or the like. The embodiment is not limited thereto.

S202. The first base station sends the first key parameter to a second base station.

S203. The second base station forwards the first key parameter to a terminal.

S204. The first base station obtains a second key parameter generated by the terminal, and generates a first base key based on the first key parameter and the second key parameter.

S204 may be performed before S202 or S203. The embodiment is not limited thereto.

The second key parameter may be sent by the terminal to the second base station in advance, and then forwarded by the second base station to the first base station, or may be sent by the second base station to the first base station after the terminal receives the first key parameter.

In a subsequent communication procedure, the first base key may be used as a key material for generating another key (for example, an encryption key, or an integrity protection key).

In this embodiment, the first base station obtains the selected key generation capability, and generates the first key parameter based on the selected key generation capability; and the second base station forwards the first key parameter to the terminal, where the first base station generates a base key based on the first key parameter and the second key parameter that is generated by the terminal, so that the first base station independently generates the base key, and the second base station plays only a role of parameter transfer. In this way, it can be ensured that the second base station cannot learn of the base key generated by the first base station, thereby ensuring key security.

Further, the obtaining, by a first base station, a selected key generation capability may be: receiving, by the first base station, a key generation capability combination sent by the second base station, where the key generation capability combination includes at least one key generation capability; and further, selecting, by the first base station, the selected key generation capability from the key generation capability combination.

Optionally, the selecting, by the first base station, the selected key generation capability from the key generation capability combination may be: selecting, by the first base station, the selected key generation capability from the key generation capability combination based on a key generation capability priority.

Optionally, after determining the selected key generation capability, the first base station sends the selected key generation capability to the second base station, and the second base station sends the selected key generation capability to the terminal.

The key generation capability priority may be allocated to the first base station in advance. However, the embodiment is not limited thereto.

Optionally, the key generation capability combination may be carried in a second base station addition request.

Optionally, the second base station may further select a security algorithm and send the selected security algorithm to the first base station and/or the terminal.

The second base station may select a "selected security algorithm" from at least one security algorithm. Specifically, the second base station may select "the selected security algorithm" based on the at least one security algorithm allocated in advance and a security algorithm priority, and further send the "the selected security algorithm" to the first base station and/or the terminal.

The security algorithm herein is different from the foregoing key generation capability. The security algorithm herein may be an encryption algorithm used to provide encryption protection for a message or an integrity protection algorithm used to provide integrity protection for a message.

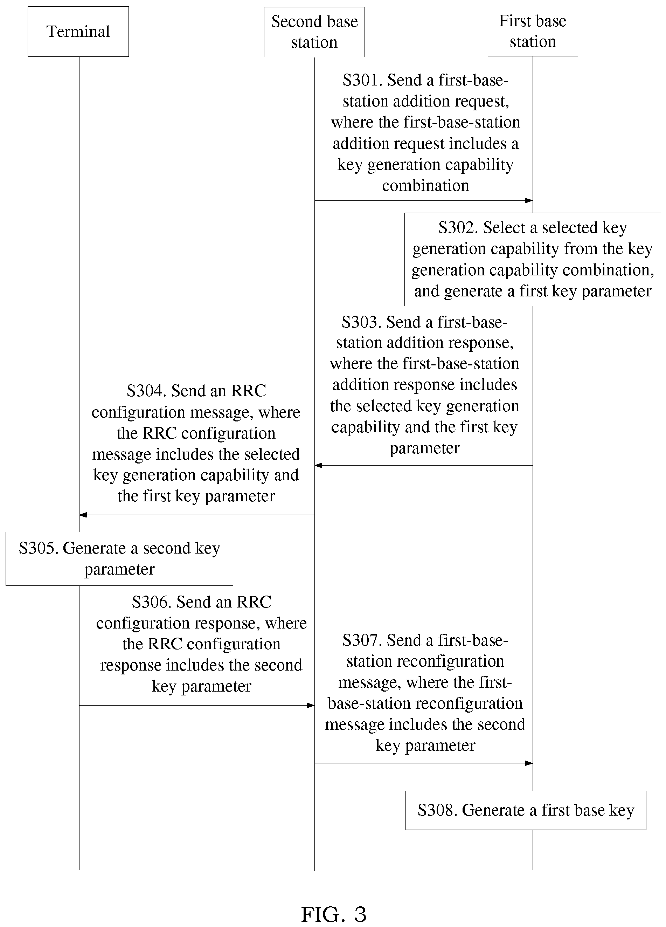

FIG. 3 is a schematic flowchart of another key negotiation method according to an embodiment of the present invention. As shown in FIG. 3, the method includes the following steps.

S301. A second base station sends a first-base-station addition request to a first base station.

Optionally, the first base station may be a next-generation base station, namely, an NR base station. The second base station may be an LTE base station, for example, an eNodeB. Correspondingly, the first-base-station addition request may be an "NR base station addition request (NR addition request)".

The first-base-station addition request includes a key generation capability combination.

S302. The first base station selects a selected key generation capability from the key generation capability combination, and generates a first key parameter.

In this embodiment, the first key parameter may be referred to as a key material generated by an initiator (KE-key i-initiator, KEi for short).

S303. The first base station sends a first-base-station addition response to the second base station, where the first-base-station addition response includes the selected key generation capability and the first key parameter.

The second base station further forwards the selected key generation capability and the first key parameter to a terminal.

S304. The second base station sends a radio resource control (Radio resource control, RRC for short) configuration message to the terminal, where the RRC configuration message includes the selected key generation capability and the first key parameter.

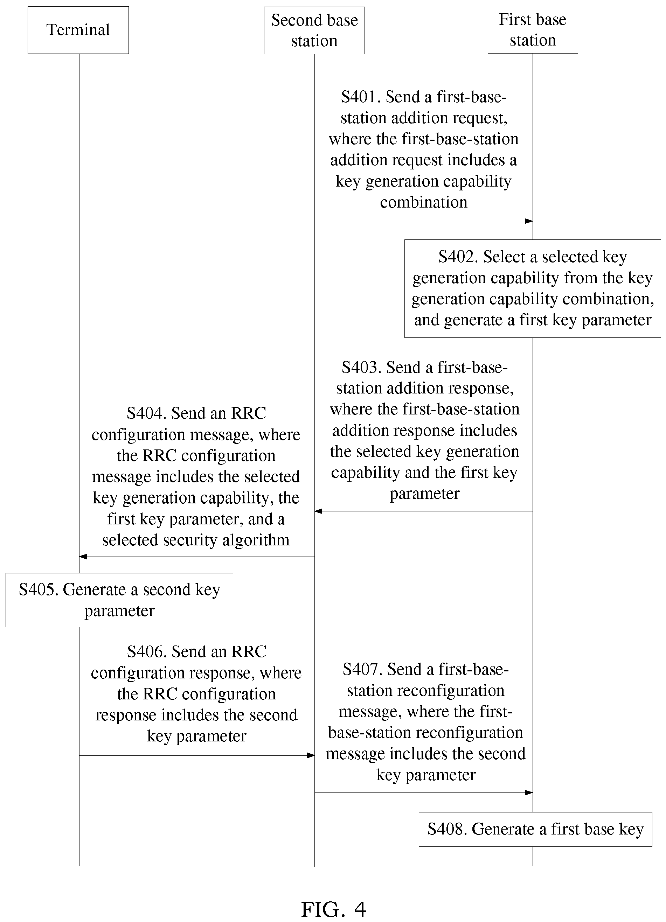

In this embodiment, the terminal receives a second signaling message sent by the second base station, where the second signaling message carries the selected key generation capability. In the embodiments in FIG. 3 and FIG. 4, description is provided by using an example in which the second signaling message is an RRC configuration message.

Optionally, the second signaling message further includes the first key parameter.

S305. The terminal generates a second key parameter based on the selected key generation capability, so that the second key parameter is further sent to the second base station and is forwarded by the second base station to the first base station.

The terminal may further generate a second base key based on the first key parameter and the second key parameter, and further generate another key based on the second base key.

In this embodiment, the second key parameter may be referred to as a key material generated by a responder (KE-key r-Response, KEr for short).

S306. The terminal sends an RRC configuration response to the second base station, where the RRC configuration response includes the second key parameter.

S307. The second base station sends a first-base-station reconfiguration message to the first base station, where the first-base-station reconfiguration message includes the second key parameter.

S308. The first base station generates a first base key based on the first key parameter and the second key parameter.

Subsequently, the terminal may initiate a random access procedure (Random Access Procedure).

After the random access procedure, the terminal and the first base station may proceed to an access stratum security mode procedure (AS Security Mode Procedure). In the AS security mode procedure, a "selected security algorithm" negotiated between the terminal and the first base station is forwarded by the first base station. The selected security algorithm may be a security algorithm selected according to a priority.

Optionally, the first base station selects the selected security algorithm from at least one security algorithm. Specifically, the selected security algorithm may be selected based on a preset security algorithm priority, or may be selected randomly. The embodiment is not limited thereto.

FIG. 4 is a schematic flowchart of another key negotiation method according to an embodiment of the present invention.

While sending a selected key generation capability to a terminal, a second base station may send a selected security algorithm to the terminal. To be specific, the foregoing second signaling message may further include the selected security algorithm.

As shown in FIG. 4, the method includes the following steps.

S401. A second base station sends a first-base-station addition request to a first base station.

The first-base-station addition request includes a key generation capability combination.

S402. The first base station selects a selected key generation capability from the key generation capability combination, and generates a first key parameter.

In this embodiment, the second base station may select a selected security algorithm.

S403. The first base station sends a first-base-station addition response to the second base station, where the first-base-station addition response includes the selected key generation capability and the first key parameter.

S404. The second base station sends an RRC configuration message to a terminal, where the RRC configuration message includes the selected key generation capability, the first key parameter, and a selected security algorithm.

S405. The terminal generates a second key parameter based on the selected key generation capability, so that the second key parameter is further sent to the second base station and is forwarded by the second base station to the first base station.

The terminal may further generate a second base key based on the first key parameter and the second key parameter, and further generate another key based on the second base key.

S406. The terminal sends an RRC configuration response to the second base station, where the RRC configuration response includes the second key parameter.

S407. The second base station sends a first-base-station reconfiguration message to the first base station, where the first-base-station reconfiguration message includes the second key parameter.

S408. The first base station generates a first base key based on the first key parameter and the second key parameter.

Subsequently, the terminal may initiate a random access procedure.

Further, the selected key generation capability may be selected by the terminal first and then sent to the first base station.

Optionally, the terminal obtains the key generation capability combination, where the key generation capability combination includes at least one key generation capability. The terminal selects "the selected key generation capability" from the key generation capability combination.

The terminal may select "the selected key generation capability" from the key generation capability combination based on a key generation capability priority, or "the selected key generation capability" may be determined randomly. Certainly, the embodiment is not limited thereto.

After determining the selected key generation capability, the terminal may directly generate the second key parameter based on the selected key generation capability, and send the second key parameter and the selected key generation capability together to the second base station. The second key parameter and the selected key generation capability are forwarded by the second base station to the first base station. However, the embodiment is not limited thereto. Alternatively, the selected key generation capability and the second key parameter may be separately sent to the second base station, and the second base station then forwards the selected key generation capability and the second key parameter to the first base station separately.

Further, optionally, the first base station receives a first signaling message sent by the second base station, where the first signaling message includes the selected key generation capability, and the selected key generation capability is determined by the terminal.

To be specific, in this manner, the terminal determines the selected key generation capability, and sends the selected key generation capability to the second base station, so that the selected key generation capability is forwarded by the second base station to the first base station.

Optionally, the first signaling message further includes the second key parameter.

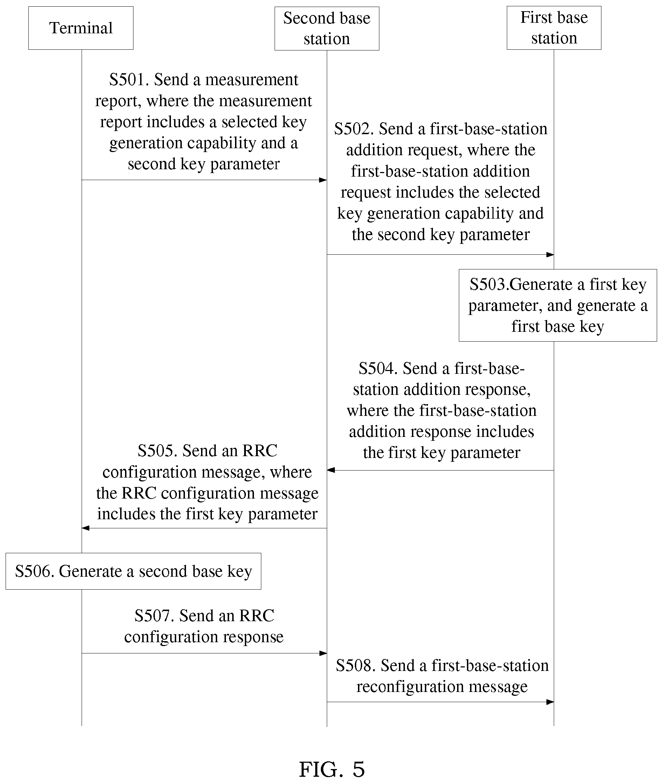

FIG. 5 is a schematic flowchart of another key negotiation method according to an embodiment of the present invention. As shown in FIG. 5, the method includes the following steps.

S501. A terminal sends a measurement report to a second base station, where the measurement report includes a selected key generation capability and a second key parameter.

In this example, the terminal sends both the selected key generation capability and the second key parameter to the second base station.

S502. The second base station sends a first-base-station addition request to a first base station, where the first-base-station addition request includes the selected key generation capability and the second key parameter.

In this embodiment, the second key parameter may be referred to as KEi.

S503. The first base station generates a first key parameter based on the selected key generation capability, and generates a first base key based on the first key parameter and the second key parameter.

Further, the first base station may further generate another key based on the first base key. The embodiment is not limited thereto. In this embodiment, the first key parameter may be referred to as KEr.

Optionally, in this embodiment, the second base station may send a key generation capability combination to the first base station, and the first base station selects a to-be-determined selected key generation capability based on a key generation capability priority and the key generation capability combination.

After receiving the selected key generation capability determined by the terminal, the first base station determines whether the selected key generation capability determined by the terminal is in the key generation capability combination. If the selected key generation capability determined by the terminal is in the key generation capability combination, regardless of whether the selected key generation capability determined by the terminal is the same as the to-be-determined selected key generation capability, the selected key generation capability determined by the terminal may be used as a final selected key generation capability for generating the first key parameter. If the selected key generation capability determined by the terminal is not in the key generation capability combination, the first base station may send a failure response to the second base station to inform that the selected key generation capability received by the second base station cannot be used, and the second base station also returns a failure response to the terminal. Further, the first base station may send the to-be-determined selected key generation capability to the second base station. The second base station then forwards the to-be-determined selected key generation capability to the terminal for negotiation. If the terminal agrees, the terminal uses the to-be-determined selected key generation capability as the final selected key generation capability, regenerates the second key parameter based on the final selected key generation capability, and sends the regenerated second key parameter to the first base station by using the second base station.

S504. The first base station sends a first-base-station addition response to the second base station, where the first-base-station addition response includes the first key parameter.

Optionally, the first-base-station addition response may further include a selected security algorithm.

Herein, the first base station may select "the selected security algorithm" based on at least one security algorithm, and forwards the selected security algorithm to the terminal by using the second base station.

Optionally, the first base station may provide integrity protection for the first-base-station addition response by using a derived key that is generated based on the first base key.

S505. The second base station sends an RRC configuration message to the terminal, where the RRC configuration message includes the first key parameter.

Optionally, if the first-base-station addition response further includes a selected security algorithm, correspondingly, the RRC configuration message includes the selected security algorithm.

The second base station may provide integrity protection for the RRC configuration message.

S506. The terminal generates a second base key based on the first key parameter and the second key parameter.

Optionally, if integrity protection has been provided for the RRC configuration message by using the derived key of the first base station, the terminal further performs integrity check.

S507. The terminal sends an RRC configuration response to the second base station.

Integrity protection may be provided for the RRC configuration response by using a derived key that is generated based on the second base key. However, the embodiment is not limited thereto.

S508. The second base station sends a first-base-station reconfiguration message to the first base station.

After receiving the first-base-station reconfiguration message, the first base station performs integrity check by using the derived key of the first base key.

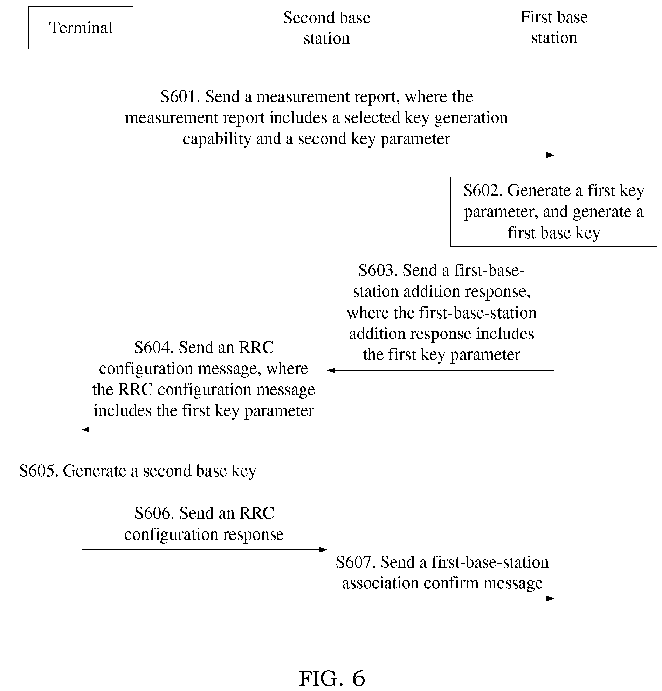

FIG. 6 is a schematic flowchart of another key negotiation method according to an embodiment of the present invention. In this embodiment, a selected key generation capability may be directly reported by a terminal to a first base station, without being forwarded by a second base station. Other steps are similar to those in the embodiment shown in FIG. 5.

S601. The terminal sends a measurement report to a first base station, where the measurement report includes a selected key generation capability and a second key parameter.

S602. The first base station generates a first key parameter based on the selected key generation capability, and generates a first base key based on the first key parameter and the second key parameter.

Further, the first base station may further generate another key based on the first base key. The embodiment is not limited thereto.

Optionally, the first base station may obtain a key generation capability combination, and may select a to-be-determined selected key generation capability based on a key generation capability priority and the key generation capability combination. After receiving the selected key generation capability determined by the terminal, the first base station determines whether the selected key generation capability determined by the terminal is in the key generation capability combination. If the selected key generation capability determined by the terminal is in the key generation capability combination, regardless of whether the selected key generation capability determined by the terminal is the same as the to-be-determined selected key generation capability, the selected key generation capability determined by the terminal may be used as a final selected key generation capability for generating the first key parameter. If the selected key generation capability determined by the terminal is not in the key generation capability combination, the first base station may send a failure response to the terminal, or, the first base station may send the to-be-determined selected key generation capability to the terminal and negotiate with the terminal. If the terminal agrees, the terminal uses the to-be-determined selected key generation capability as the final selected key generation capability, regenerates the second key parameter based on the final selected key generation capability, and sends the regenerated second key parameter to the first base station by using a second base station.

S603. The first base station sends a first-base-station addition response to a second base station. The first-base-station addition response includes the first key parameter.

Optionally, the first-base-station addition response may further include a terminal identity (terminal ID).

Optionally, the first-base-station addition response may further include a selected security algorithm.

Herein, the first base station may select "the selected security algorithm" based on at least one security algorithm.

The first base station may provide integrity protection for the first-base-station addition response except the part of the terminal identity. However, the embodiment is not limited thereto.

S604. The second base station sends an RRC configuration message to the terminal, where the RRC configuration message includes the first key parameter.

Optionally, if the first-base-station addition response further includes a selected security algorithm, correspondingly, the RRC configuration message includes the selected security algorithm.

S605. The terminal generates a second base key based on the first key parameter and the second key parameter.

S606. The terminal sends an RRC configuration response to the second base station.

Integrity protection may be provided for the RRC configuration response by using a derived key that is generated based on the second base key. However, the embodiment is not limited thereto.

S607. The second base station sends a first-base-station association confirm (Association confirm) message to the first base station, where the first-base-station association confirm message may be an NR Association confirm message. This is not limited thereto.

After receiving the first-base-station association confirm message, the first base station performs integrity check by using the derived key of the first base key.

It needs to be noted that the foregoing messages transmitted between the terminal, the first base station, and the second base station are only examples, and may be flexibly adjusted during specific implementation. A main purpose of the messages each is to transmit a key capability or a key parameter, or the like that is carried in the message.

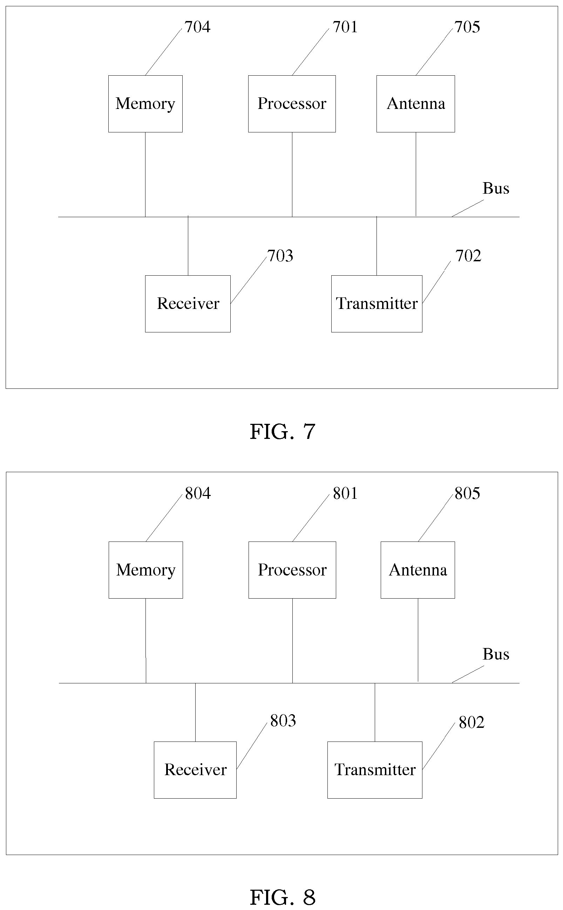

FIG. 7 is a schematic structural diagram of a key negotiation apparatus according to an embodiment of the present invention. The apparatus may be inherited from the foregoing base stations, and may be specifically the first base station or the second base station. The embodiment is not limited thereto. As shown in FIG. 7, the key negotiation apparatus includes a processor 701, a transmitter 702, a receiver 703, a memory 704, and an antenna 705.

The memory 704, the transmitter 702, the receiver 703, and the processor 701 may be connected to each other by using a bus. Certainly, during actual application, a structure between the memory 704, the transmitter 702, the receiver 703, and the processor 701 may be not a bus structure, but may be another structure, for example, a star structure. This application is not specifically limited thereto.

Optionally, the processor 701 may be specifically a general purpose central processing unit or an ASIC, or may be one or more integrate circuits used to control program execution, or may be a hardware circuit developed by using an FPGA, or may be a baseband processor.

Optionally, the processor 701 may include at least one processing core.

Optionally, the memory 704 may include one or more of a ROM, a RAM, and a magnetic disk memory. The memory 704 is configured to store data and/or an instruction that are required during running of the processor 701. There may be one or more memories 704.

The apparatus may be configured to perform any method in the foregoing method embodiments. Specifically:
the processor 701 is configured to: obtain a selected key generation capability, and generate a first key parameter based on the selected key generation capability; and obtain a second key parameter generated by a terminal, and generate a first base key based on the first key parameter and the second key parameter; and
the transmitter 702 is configured to send the first key parameter to a second base station, where the first key parameter is forwarded by the second base station to the terminal.

In this embodiment, a first base station obtains the selected key generation capability, and generates the first key parameter based on the selected key generation capability; and the second base station forwards the first key parameter to the terminal, where the first base station generates a base key based on the first key parameter and the second key parameter that is generated by the terminal, so that the first base station independently generates the base key, and the second base station plays only a role of parameter transfer. In this way, it can be ensured that the second base station cannot learn of the base key generated by the first base station, thereby ensuring key security.

Optionally, the processor 701 is specifically configured to: receive a key generation capability combination sent by the second base station, where the key generation capability combination includes at least one key generation capability; and select the selected key generation capability from the key generation capability combination.

It needs to be noted that the processor 701 may receive, by using the receiver 703, the key generation capability combination sent by the second base station.

Further, the processor 701 is specifically configured to select the selected key generation capability from the key generation capability combination based on a key generation capability priority.

The transmitter 702 is further configured to send the selected key generation capability to the second base station, so that the selected key generation capability is forwarded by the second base station to the terminal.

The processor 701 is specifically configured to receive a first signaling message sent by the second base station, where the first signaling message includes the selected key generation capability, and the selected key generation capability is determined by the terminal.

The first signaling message further includes the second key parameter.

The receiver 703 is further configured to receive a selected security algorithm sent by the second base station, where the selected security algorithm is selected by the second base station based on at least one security algorithm.

When the apparatus shown in FIG. 7 is integrated in the second base station:
the receiver 703 receives a first key parameter sent by a first base station; and
the transmitter 702 forwards the first key parameter to a terminal.

Optionally, before the receiver 703 receives the first key parameter sent by the first base station, the transmitter 702 sends a key generation capability combination to the first base station, where the key generation capability combination includes at least one key generation capability.

Further, the receiver 703 receives a selected key generation capability sent by the first base station.

The transmitter 702 forwards the selected key generation capability to the terminal.

Specifically, the transmitter 702 sends a second signaling message to the terminal, where the second signaling message includes the selected key generation capability.

Optionally, the second signaling message further includes the first key parameter.

Optionally, the second signaling message further includes a selected security algorithm, and the selected security algorithm is selected by the second base station based on at least one security algorithm.

Optionally, the receiver 703 receives a selected key generation capability sent by the terminal; and the transmitter 702 forwards the selected key generation capability to the first base station.

Further, the transmitter 702 sends a selected security algorithm to the terminal and the first base station separately, where the selected security algorithm is selected by the second base station based on at least one security algorithm.

The apparatus may be used in the foregoing method embodiments performed by a base station and has similar implementation principles and technical effects. For related content, refer to the method embodiments. Details are not described herein again.

FIG. 8 is a schematic structural diagram of another key negotiation apparatus according to an embodiment of the present invention. The apparatus may be inherited from the foregoing terminal. The embodiment is not limited thereto. As shown in FIG. 8, the key negotiation apparatus includes a processor 801, a transmitter 802, a receiver 803, a memory 804, and an antenna 805.

The memory 804, the transmitter 802, the receiver 803, and the processor 801 may be connected to each other by using a bus. Certainly, during actual application, a structure between the memory 804, the transmitter 802, the receiver 803, and the processor 801 may be not a bus structure, but may be another structure, for example, a star structure. This application is not specifically limited thereto.

Optionally, the processor 801 may be specifically a general purpose central processing unit or an ASIC, or may be one or more integrate circuits used to control program execution, or may be a hardware circuit developed by using an FPGA, or may be a baseband processor.

Optionally, the processor 801 may include at least one processing core.

Optionally, the memory 804 may include one or more of a ROM, a RAM, and a magnetic disk memory. The memory 804 is configured to store data and/or an instruction that are required during running of the processor 701. There may be one or more memories 804.

The apparatus may be configured to perform any method in the foregoing method embodiments. Specifically:
the processor 801 is configured to: obtain a selected key generation capability, and generate a second key parameter based on the selected key generation capability; obtain a first key parameter forwarded by a second base station, where the first key parameter is generated by a first base station based on the selected key generation capability; and generate a second base key based on the first key parameter and the second key parameter.

Optionally, the processor 801 is specifically configured to receive a second signaling message sent by the second base station, where the second signaling message includes the selected key generation capability.

The processor 801 may receive, by using the receiver 803, the second signaling message sent by the second base station.

Optionally, the second signaling message further includes the first key parameter.

Optionally, the second signaling message further includes a selected security algorithm, and the selected security algorithm is selected by the second base station based on at least one security algorithm.

The processor 801 is specifically configured to: obtain a key generation capability combination, where the key generation capability combination includes at least one key generation capability; and select the selected key generation capability from the key generation capability combination.

The processor 801 is specifically configured to: after selecting the selected key generation capability from the key generation capability combination, send the selected key generation capability to the second base station, so that the selected key generation capability is forwarded by the second base station to the first base station.

Optionally, the receiver 803 is configured to receive a selected security algorithm sent by the second base station, where the selected security algorithm is selected by the second base station based on at least one security algorithm.

The apparatus may be used in the foregoing method embodiments performed by a terminal and has similar implementation principles and technical effects. For related content, refer to the method embodiments. Details are not described herein again.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A key negotiation method, executed by a first base station, the method comprising:
receiving (S301), by the first base station, from a second base station, in a first base station addition request message, at least one key generation capability,
selecting (S302) by the first base station, a selected key generation capability from the at least one key generation capability, and
generating (S302), by the first base station, a first key parameter based on the selected key generation capability, wherein the selected key generation capability is an optimal key generation capability selected from the at least one key generation capability;
sending (S303), by the first base station, the first key parameter to the second base station, in a first base station addition response message,
wherein the first key parameter is forwarded by the second base station to a terminal (S202);
obtaining (S307), by the first base station, from the second base station, a second key parameter generated by the terminal;
and generating (S308), by the first base station, a first base key based on the first key parameter and the second key parameter,
wherein the second base station does not learn of the first base key.

2. The method according to claim 1, wherein the selecting by the first base station, the selected key generation capability from the at least one key generation capability comprises:
receiving, by the first base station, a key generation capability combination sent by the second base station, wherein the key generation capability combination comprises the at least one key generation capability; and
selecting (S302), by the first base station, the selected key generation capability from the key generation capability combination.

3. The method according to claim 2, wherein the selecting, by the first base station, the selected key generation capability from the key generation capability combination comprises:
selecting, by the first base station, the selected key generation capability from the key generation capability combination based on a key generation capability priority.

4. The method according to claim 2, wherein the method further comprises:
sending (S303), by the first base station, the selected key generation capability to the second base station, so that the selected key generation capability is forwarded by the second base station to the terminal.

5. The method according to claim 1, wherein the receiving, by the first base station, the selected key generation capability comprises: receiving, by the first base station, a first signaling message sent by the second base station, wherein the first signaling message comprises the selected key generation capability, and the selected key generation capability is determined by the terminal.

6. The method according to claim 5, wherein the first signaling message further comprises the second key parameter.

7. A key negotiation method, executed by a terminal, the method comprising:
receiving (S304), by the terminal, from a second base station, a selected key generation capability, and generating (S305), a second key parameter based on the selected key generation capability, wherein the selected key generation capability is an optimal key generation capability selected from at least one key generation capability;
obtaining (S304), by the terminal, a first key parameter forwarded by the second base station, wherein the first key parameter is generated by a first base station based on the selected key generation capability; and
generating (S305), by the terminal, a second base key based on the first key parameter and the second key parameter;
and sending (S306) by the terminal the second key parameter to the second base station,
wherein the second key parameter is forwarded by the second base station to the first base station, and wherein the second base station does not learn of the second base key.

8. The method according to claim 7, wherein the receiving, by the terminal, a selected key generation capability comprises:
receiving, by the terminal, a second signaling message sent by the second base station, wherein the second signaling message comprises the selected key generation capability.

9. The method according to claim 8, wherein the second signaling message further comprises the first key parameter.

10. The method according to claim 8 or 9, wherein the second signaling message further comprises a selected security algorithm, and the selected security algorithm is selected by the second base station from at least one security algorithm.

11. The method according to claim 7, wherein the receiving, by the terminal, a selected key generation capability comprises:
obtaining, by the terminal, a key generation capability combination, wherein the key generation capability combination comprises at least one key generation capability; and
selecting, by the terminal, the selected key generation capability from the key generation capability combination.

12. The method according to claim 11, wherein after the selecting, by the terminal, the selected key generation capability from the key generation capability combination, the method further comprises:
sending, by the terminal, the selected key generation capability to the second base station, so that the selected key generation capability is forwarded by the second base station to the first base station.

13. A first base station apparatus for key negotiation, comprising a processor coupled with a non-transitory storage medium storing executable instructions; wherein the executable instructions, when executed by the processor, cause the processor to carry out the method of any one of claims 1-6.

14. A terminal apparatus for key negotiation, comprising a processor coupled with a non-transitory storage medium storing executable instructions; wherein the executable instructions, when executed by the processor, cause the processor to carry out the method of any one of claims 7-12.

15. A computer-readable storage medium comprising instructions which, when executed by a computer, cause the computer to carry out the method of any one of claims 1-6.

16. A computer-readable storage medium comprising instructions which, when executed by a computer, cause the computer to carry out the method of any one of claims 7-12.

## Patentansprüche

1. Schlüsselaushandlungsverfahren, das durch eine erste Basisstation ausgeführt wird, wobei das Verfahren Folgendes umfasst:
Empfangen (S301), durch die erste Basisstation, wenigstens einer Schlüsselerzeugungsfähigkeit von einer zweiten Basisstation in einer Anforderungsnachricht einer Addition der ersten Basisstation, Auswählen (S302), durch die erste Basisstation, einer ausgewählten Schlüsselerzeugungsfähigkeit aus der wenigstens einen Schlüsselerzeugungsfähigkeit und Erzeugen (302), durch die erste Basisstation, eines ersten Schlüsselparameters basierend auf der ausgewählten Schlüsselerzeugungsfähigkeit,
wobei die ausgewählte Schlüsselerzeugungsfähigkeit eine optimale Schlüsselerzeugungsfähigkeit ist, die aus der wenigstens einen Schlüsselerzeugungsfähigkeit ausgewählt wird:
Senden (S303), durch die erste Basisstation, des ersten Schlüsselparameters an die zweite Basisstation in einer Antwortnachricht der Addition der ersten Basisstation,
wobei der erste Schlüsselparameter durch die zweite Basisstation an ein Endgerät (S202) weitergeleitet wird;
Erhalten (S307), durch die erste Basisstation, eines zweiten Schlüsselparameters von der zweiten Basisstation, der durch das Endgerät erzeugt wird;
und Erzeugen (S308), durch die erste Basisstation, eines ersten Basisschlüssels basierend auf dem ersten Schlüsselparameter und dem zweiten Schlüsselparameter,
wobei die zweite Basisstation nichts von dem ersten Basisschlüssel erfährt.

2. Verfahren nach Anspruch 1, wobei das Auswählen, durch die erste Basisstation, der ausgewählten Schlüsselerzeugungsfähigkeit aus der wenigstens einen Schlüsselerzeugungsfähigkeit Folgendes umfasst:
Empfangen, durch die erste Basisstation, einer durch die zweite Basisstation gesendeten Schlüsselerzeugungsfähigkeitskombination, wobei die Schlüsselerzeugungsfähigkeitskombination die wenigstens eine Schlüsselerzeugungsfähigkeit umfasst; und
Auswählen (S302), durch die erste Basisstation, der ausgewählten Schlüsselerzeugungsfähigkeit aus der Schlüsselerzeugungsfähigkeitskombination.

3. Verfahren nach Anspruch 2, wobei das Auswählen, durch die erste Basisstation, der ausgewählten Schlüsselerzeugungsfähigkeit aus der Schlüsselerzeugungsfähigkeitskombination Folgendes umfasst:
Auswählen, durch die erste Basisstation, der ausgewählten Schlüsselerzeugungsfähigkeit aus der Schlüsselerzeugungsfähigkeitskombination basierend auf einer Schlüsselerzeugungsfähigkeitspriorität.

4. Verfahren nach Anspruch 2, wobei das Verfahren ferner Folgendes umfasst:
Senden (S303), durch die erste Basisstation, der ausgewählten Schlüsselerzeugungsfähigkeit an die zweite Basisstation, so dass die ausgewählte Schlüsselerzeugungsfähigkeit durch die zweite Basisstation an das Endgerät weitergeleitet wird.

5. Verfahren nach Anspruch 1, wobei das Empfangen, durch die erste Basisstation, der ausgewählten Schlüsselerzeugungsfähigkeit Folgendes umfasst:
Empfangen, durch die erste Basisstation, einer ersten Signalisierungsnachricht, die durch die zweite Basisstation gesendet wird, wobei die erste Signalisierungsnachricht die ausgewählte Schlüsselerzeugungsfähigkeit umfasst und die ausgewählte Schlüsselerzeugungsfähigkeit durch das Endgerät bestimmt wird.

6. Verfahren nach Anspruch 5, wobei die erste Signalisierungsnachricht ferner den zweiten Schlüsselparameter umfasst.

7. Schlüsselaushandlungsverfahren, das durch ein Endgerät ausgeführt wird, wobei das Verfahren Folgendes umfasst:
Empfangen (S304), durch das Endgerät, einer ausgewählten Schlüsselerzeugungsfähigkeit von einer zweiten Basisstation und Erzeugen (S305) eines zweiten Schlüsselparameters basierend auf der ausgewählten Schlüsselerzeugungsfähigkeit, wobei die ausgewählte Schlüsselerzeugungsfähigkeit eine optimale Schlüsselerzeugungsfähigkeit ist, die aus wenigstens einer Schlüsselerzeugungsfähigkeit ausgewählt wird;
Erhalten (S304), durch das Endgerät, eines ersten Schlüsselparameters, der durch die zweite Basisstation weitergeleitet wird, wobei der erste Schlüsselparameter durch eine erste Basisstation basierend auf der ausgewählten Schlüsselerzeugungsfähigkeit erzeugt wird; und
Erzeugen (S305), durch das Endgerät, eines zweiten Basisschlüssels basierend auf dem ersten Schlüsselparameter und dem zweiten Schlüsselparameter;
und Senden (S306), durch das Endgerät, des zweiten Schlüsselparameters an die zweite Basisstation, wobei der zweite Schlüsselparameter durch die zweite Basisstation an die erste Basisstation weitergeleitet wird, und
wobei die zweite Basisstation nichts von dem zweiten Basisschlüssel erfährt.

8. Verfahren nach Anspruch 7, wobei das Empfangen, durch das Endgerät, einer ausgewählten Schlüsselerzeugungsfähigkeit Folgendes umfasst:
Empfangen, durch das Endgerät, einer zweiten Signalisierungsnachricht, die durch die zweite Basisstation gesendet wird, wobei die zweite Signalisierungsnachricht die ausgewählte Schlüsselerzeugungsfähigkeit umfasst.

9. Verfahren nach Anspruch 8, wobei die zweite Signalisierungsnachricht ferner den ersten Schlüsselparameter umfasst.

10. Verfahren nach Anspruch 8 oder 9, wobei die zweite Signalisierungsnachricht ferner einen ausgewählten Sicherheitsalgorithmus umfasst und der ausgewählte Sicherheitsalgorithmus durch die zweite Basisstation aus wenigstens einem Sicherheitsalgorithmus ausgewählt wird.

11. Verfahren nach Anspruch 7, wobei das Empfangen, durch das Endgerät, einer ausgewählten Schlüsselerzeugungsfähigkeit Folgendes umfasst:
Erhalten, durch das Endgerät, einer Schlüsselerzeugungsfähigkeitskombination, wobei die Schlüsselerzeugungsfähigkeitskombination wenigstens eine Schlüsselerzeugungsfähigkeit umfasst; und
Auswählen, durch das Endgerät, der ausgewählten Schlüsselerzeugungsfähigkeit aus der Schlüsselerzeugungsfähigkeitskombination.

12. Verfahren nach Anspruch 11, wobei nach dem Auswählen, durch das Endgerät, der ausgewählten Schlüsselerzeugungsfähigkeit aus der Schlüsselerzeugungsfähigkeitskombination das Verfahren ferner Folgendes umfasst:
Senden, durch das Endgerät, der ausgewählten Schlüsselerzeugungsfähigkeit an die zweite Basisstation, so dass die ausgewählte Schlüsselerzeugungsfähigkeit durch die zweite Basisstation an die erste Basisstation weitergeleitet wird.

13. Vorrichtung der ersten Basisstation für die Schlüsselaushandlung, die einen Prozessor umfasst, der mit einem nichtflüchtigen Speichermedium gekoppelt ist, das ausführbare Anweisungen speichert; wobei die ausführbaren Anweisungen, wenn sie durch den Prozessor ausgeführt werden, den Prozessor veranlassen, das Verfahren nach einem der Ansprüche 1-6 durchzuführen.

14. Vorrichtung des Endgeräts für die Schlüsselverhandlung, die einen Prozessor umfasst, der mit einem nichtflüchtigen Speichermedium gekoppelt ist, das ausführbare Anweisungen speichert; wobei die ausführbaren Anweisungen, wenn sie durch den Prozessor ausgeführt werden, den Prozessor veranlassen, das Verfahren nach einem der Ansprüche 7-12 durchzuführen.

15. Computerlesbares Speichermedium, das Anweisungen umfasst, die, wenn sie durch einen Computer ausgeführt werden, den Computer veranlassen, das Verfahren nach einem der Ansprüche 1-6 durchzuführen.

16. Computerlesbares Speichermedium, das Anweisungen umfasst, die, wenn sie durch einen Computer ausgeführt werden, den Computer veranlassen, das Verfahren nach einem der Ansprüche 7-12 durchzuführen.

## Revendications

1. Procédé de négociation de clé, exécuté par une première station de base, le procédé comprenant :
la réception (S301), par la première station de base, à partir d'une seconde station de base, dans un premier message de demande d'ajout de station de base, d'au moins une capacité de génération de clé, en sélectionnant (S302) par la première station de base, une capacité de génération de clé sélectionnée à partir de l'au moins une capacité de génération de clé, et la génération (S302), par
la première station de base, un premier paramètre de clé en fonction de la capacité de génération de clé sélectionnée,
dans lequel la capacité de génération de clé sélectionnée est une capacité de génération de clé optimale sélectionnée parmi l'au moins une capacité de génération de clé :
l'envoi (S303), par la première station de base, du premier paramètre de clé à la seconde station de base, dans un premier message de réponse d'ajout de station de base,
dans lequel le premier paramètre de clé est transmis par la seconde station de base à un terminal (S202) ;
l'obtention (S307), par la première station de base, à partir de la seconde station de base, un second paramètre de clé généré par le terminal ;
et la génération (S308), par la première station de base, d'une première clé de base en fonction du premier paramètre de clé et du second paramètre de clé,
dans lequel la seconde station de base n'apprend pas la première clé de base.

2. Procédé selon la revendication 1, dans lequel la sélection par la première station de base, de la capacité de génération de clé sélectionnée à partir de l'au moins une capacité de génération de clé comprend :
la réception, par la première station de base, d'une combinaison de capacité de génération de clé envoyée par la seconde station de base, la combinaison de capacité de génération de clé comprenant l'au moins une capacité de génération de clé ; et
la sélection (S302), par la première station de base, de la capacité de génération de clé sélectionnée à partir de la combinaison de capacité de génération de clé.

3. Procédé selon la revendication 2, dans lequel la sélection, par la première station de base, de la capacité de génération de clé sélectionnée à partir de la combinaison de capacité de génération de clé comprend :
la sélection, par la première station de base, de la capacité de génération de clé sélectionnée à partir de la combinaison de capacité de génération de clé en fonction d'une priorité de capacité de génération de clé.

4. Procédé selon la revendication 2, dans lequel le procédé comprend en outre :
l'envoi (S303), par la première station de base, de la capacité de génération de clé sélectionnée à la seconde station de base, de sorte que la capacité de génération de clé sélectionnée est transmise par la seconde station de base au terminal.

5. Procédé selon la revendication 1, dans lequel la réception, par la première station de base, de la capacité de génération de clé sélectionnée comprend :
la réception, par la première station de base, d'un premier message de signalisation envoyé par la seconde station de base, le premier message de signalisation comprenant la capacité de génération de clé sélectionnée, et la capacité de génération de clé sélectionnée étant déterminée par le terminal.

6. Procédé selon la revendication 5, dans lequel le premier message de signalisation comprend en outre le second paramètre de clé.

7. Procédé de négociation de clé, exécuté par un terminal, le procédé comprenant :
la réception (S304), par le terminal, à partir d'une seconde station de base, d'une capacité de génération de clé sélectionnée, et la génération (S305), d'un second paramètre de clé en fonction de la capacité de génération de clé sélectionnée, la capacité de génération de clé sélectionnée étant une génération de clé optimale une capacité sélectionnée parmi au moins une capacité de génération de clé ;
l'obtention (S304), par le terminal, d'un premier paramètre de clé transmis par la seconde station de base, le premier paramètre de clé étant généré par une première station de base en fonction de la capacité de génération de clé sélectionnée ; et
la génération (S305), par le terminal, d'une seconde clé de base en fonction du premier paramètre de clé et du second paramètre de clé ;
et l'envoi (S306) par le terminal du second paramètre de clé à la seconde station de base, le second paramètre de clé étant transmis par la seconde station de base à la première station de base, et
dans lequel la seconde station de base n'apprend pas la seconde clé de base.

8. Procédé selon la revendication 7, dans lequel la réception, par le terminal, d'une capacité de génération de clé sélectionnée comprend :
la réception, par le terminal, d'un second message de signalisation envoyé par la seconde station de base, le second message de signalisation comprenant la capacité de génération de clé sélectionnée.

9. Procédé selon la revendication 8, dans lequel le second message de signalisation comprend en outre le premier paramètre de clé.

10. Procédé selon la revendication 8 ou 9, dans lequel le second message de signalisation comprend en outre un algorithme de sécurité sélectionné, et l'algorithme de sécurité sélectionné est sélectionné par la seconde station de base parmi au moins un algorithme de sécurité.

11. Procédé selon la revendication 7, dans lequel la réception, par le terminal, d'une capacité de génération de clé sélectionnée comprend :
l'obtention, par le terminal, d'une combinaison de capacité de génération de clé, la combinaison de capacité de génération de clé comprenant au moins une capacité de génération de clé ; et
la sélection, par le terminal, de la capacité de génération de clé sélectionnée à partir de la combinaison de capacité de génération de clé.

12. Procédé selon la revendication 11, dans lequel après la sélection, par le terminal, de la capacité de génération de clé sélectionnée à partir de la combinaison de capacité de génération de clé, le procédé comprend en outre :
l'envoi, par le terminal, de la capacité de génération de clé sélectionnée à la seconde station de base, de sorte que la capacité de génération de clé sélectionnée est transmise par la seconde station de base à la première station de base.

13. Premier appareil de station de base pour la négociation de clé, comprenant un processeur couplé à un support de stockage non transitoire stockant des instructions exécutables ; dans lequel les instructions exécutables, lorsqu'elles sont exécutées par le processeur, amènent le processeur à mettre en œuvre le procédé de l'une quelconque des revendications 1 à 6.

14. Appareil terminal pour la négociation de clé, comprenant un processeur couplé à un support de stockage non transitoire stockant des instructions exécutables ; dans lequel les instructions exécutables, lorsqu'elles sont exécutées par le processeur, amènent le processeur à mettre en œuvre le procédé de l'une quelconque des revendications 7 à 12.

15. Support lisible par ordinateur comprenant des instructions qui, lorsqu'elles sont exécutées par un ordinateur, amènent l'ordinateur à mettre en œuvre le procédé selon l'une quelconque des revendications 1 à 6.

16. Support lisible par ordinateur comprenant des instructions qui, lorsqu'elles sont exécutées par un ordinateur, amènent l'ordinateur à mettre en œuvre le procédé selon l'une quelconque des revendications 7 à 12.
